# EUROPÄISCHE PATENTSCHRIFT

(11) **EP 1 541 320 B1**
(45) Veröffentlichungstag und Bekanntmachung des Hinweises auf die Patenterteilung: **01.03.2006**
(21) Anmeldenummer: 04028206.3
(22) Anmeldetag: 27.11.2004
(51) Int. Cl.: B29C 51/42

(54) **Formwerkzeug zum Tiefziehen von Behältern aus thermoplastischem Kunststoff**
Device for thermoforming of thermoplastic containers
Appareil pour thermo formage un réservoir en matière plastique

(30) Priorität: 01.12.2003 DE 10356633
(43) Veröffentlichungstag der Anmeldung: 15.06.2005
(73) Patentinhaber: Adolf Illig GmbH & Co. KG, 74081 Heilbronn (DE)
(72) Erfinder: Trautwein, Herbert, 71737 Kirchberg (DE); Teller, Marcus, 74078 Heilbronn (DE)

(56) Entgegenhaltungen:
- EP-A- 1 142 691
- EP-A- 1 398 134
- DE-U1- 29 605 249

## Beschreibung

Die Erfindung geht aus von einem Formwerkzeug nach dem Oberbegriff des Anspruches 1. Mit diesem werden aus einer erwärmten Folienbahn aus thermoplastischem Kunststoff Behälter mittels Druckluft tiefgezogen und ausgestanzt.

Aus der DE 198 38 290 A1 ist ein Formwerkzeug bekannt, bei dem mehrere einteilige Schnittstempel, die im Innem die Gestalt des herzustellenden Behälters aufweisen, in einen Kühlblock eingesetzt werden. Dies kann einreihig oder mehrreihig erfolgen und bestimmt die Nutzenzahl des Formwerkzeuges. Es ist ferner bekannt, den Schnittstempel aufzuteilen in einen hülsenförmigen Schnittstempel aus Stahl und einen eingesetzten Formeinsatz mit der Gestalt des Behälters, der dann in der Regel wegen verschiedener Gründe aus Aluminium gefertigt wird. Nachteilig ist die schlechte Wärmeleitfähigkeit des Stahls, wodurch eine intensive Kühlung der vom Kühlmittel weit entfernten Stirnfläche des Schnittstempels, die den Behälterrand kühlt, verhindert und die mögliche Taktzahl des Formwerkzeuges beschränkt wird. Ein zu warm entformter Behälterrand verzieht sich bei nicht fixierter Abkühlung und die Behälter werden für ein Versiegeln und für bestimmte Weiterverwendungen unbrauchbar.
Um das Kühlen allgemein zu verbessem wird in der DE 296 05 249 U1 vorgeschlagen, jeden Schnittstempel aufzuteilen in eine Kühlhülse (Pos. 5), die beispielsweise aus Aluminium besteht und in einen Schnittring (Pos. 42) aus Stahl und beide, den Schnittring mit einem Zentrierbund, in dieselbe Bohrung in den Kühlblock einzusetzen. Die beiden Stimflächen sitzen aufeinander (Beschreibung Seite 6 ab Zeile 11). Der Schnittring ist an vier Ecken mit dem Kühlblock verschraubt (siehe Fig. 4).
Diese Gestaltung hat verschiedene Nachteile. So ist eine direkte Kühlung des Schnittringes nicht möglich und erfolgt nur indirekt über die beiden anliegenden Stimflächen von der Kühlhülse aus und ggf. über den innen anliegenden Formeinsatz. Schon ein geringer Spalt zwischen den Stimflächen reduziert den Wärmeübergang drastisch. Dies tritt schon bei einem geringen Lösen der Schraubverbindung ein, das bei den hohen Erschütterungen der Formmaschine auftreten kann. Eine hohe Präzision der Axialmaße der betroffenen Bauteile ist erforderlich. Dies gilt auch für den Durchmesser des Zentrierbundes des Schnittringes, der exakt mit der Bohrung im Kühlblock übereinstimmen muss und der nur eine kurze Führung aufweist. Der Schnittspalt zum Stanzen im Zusammenwirken mit der Matrize 11 ist sehr gering, die Gefahr des Auftreffens, auch bedingt durch Wärmeausdehnung des Formwerkzeuges während der Produktion, besteht. Insgesamt ist der Abstand zwischen der Stimfläche des Schnittringes und der nächstliegenden Kühlkammer in der Kühlhülse relativ groß, auch bedingt durch die erforderliche Abdichtung dieser Kühlkammer mit einem Dichtring. Damit ist die Kühlwirkung bezüglich der Stimfläche des Schnittringes beschränkt.
EP 1 398 134 A2 schlägt vor, die Schnittstempel in Form einer Platte auszubilden, d.h. die Schnittstempel sind nicht einzeln in den unteren Kühlblock eingelassen, sondern als Stanzplatte einstückig ausgebildet. Diese Stanzplatte aus gehärtetem Stahl wird an einem unteren Kühlblock aus Leichtmetall nicht starr befestigt, so dass die exakte Relativpositionierung der zusammen wirkenden Trennkanten gewährleistet werden kann. Diese Gestaltung weist den Nachteil auf, dass bei Abnützung oder Beschädigung der Trennkanten die komplette Stanzplatte ersetzt werden muss, welche ein kostenintensives Bauteil darstellt. Ebenfalls sind die Fertigungskomplexität und somit auch die Fertigungskosten der spanenden Umformung für die Stanzplatte sehr hoch.
Der Erfindung liegt die Aufgabe zugrunde, die geschilderten Nachteile des Standes der Technik zu überwinden unter Beibehaltung des Vorteiles einer Aufteilung des Schnittstempels in einen Schnittring aus Stahl und in eine Kühlhülse aus einem gut wärmeleitenden Werkstoff. Die Kühlung der Stimfläche des Schnittringes sollte verbessert werden, indem ein guter Wärmeübergang zwischen Schnittring und Kühlhülse gegeben ist. Enge Axialtoleranzen der beiden Bauteile sollten nicht erforderlich sein. Die Zentrierung und Fixierung des Schnittringes sollte verbessert werden.

Gelöst ist diese Aufgabe erfindungsgemäß durch die im Kennzeichen des Hauptanspruchs angegebenen Maßnahmen. Indem Schnittring und Kühlhülse fest miteinander verbunden sind, gibt es keine Beeinflussung des Wärmeübergangs, und eine sichere zentrierte Lage im Kühlmantel ist gegeben. Die Kühlhülse kann gemäß einer ersten Ausführungsform relativ weit in Richtung Stimfläche des Schnittringes geführt werden, sodass die direkte Kühlung nahe bis zur Stirnfläche des Schnittringes geführt wird oder der Schnittring kann gemäß einer weiteren Ausführungsform im Innem selbst gekühlt werden, wodurch derselbe Vorteil erzielt wird.

Weitere bevorzugte Ausgestaltungen der Erfindung ergeben sich aus den übrigen, in den Unteransprüchen genannten Merkmalen.

Das Formwerkzeug ist anhand der schematischen Zeichnungen näher beschrieben. Es zeigt:
- Figur 1: einen Querschnitt durch das Formwerkzeug in geschlossener Stellung vor Einleitung des Tiefziehvorganges.
- Figur 2: eine vergrößerte Darstellung des Unterteils des Formwerkzeuges nach dem Formen eines Behälters und vor dessen Auswerfen.

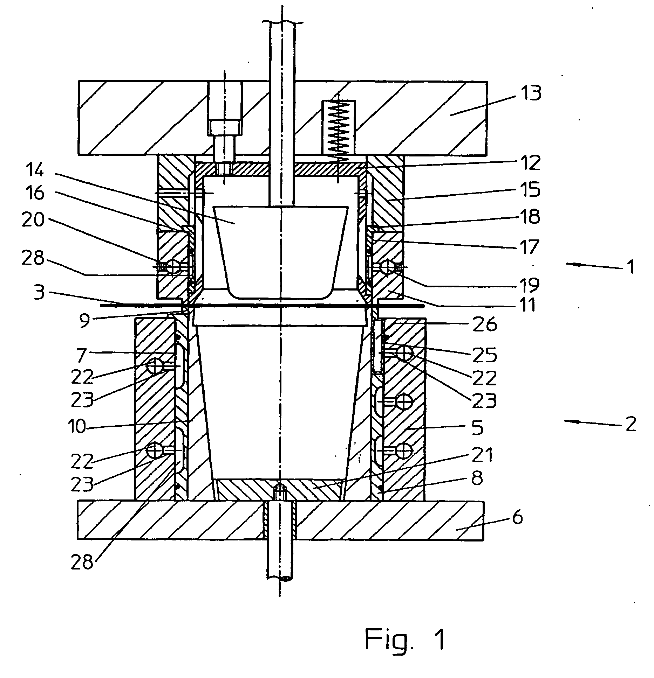

Das Formwerkzeug gemäß Figur 1 besteht aus einem Oberteil 1 und einem Unterteil 2, die relativ zueinander verschiebbar sind und im Zusammenwirken eine Folie 3 zu einem Behälter 4 tiefziehen und diesen ausstanzen. Das Oberteil 1 setzt sich zusammen aus der Matrize 11, der Kopfplatte 13, der Zwischenplatte 15 sowie pro Formnest aus einem Niederhalter 12 und einem darin verschiebbaren Streckhelfer 14. In jeder Bohrung 17 in der Matrize 11 sitzt eine Buchse 16, die oben eine Schulter 18 als Anschlag aufweist. Sie ist versehen mit einer ringsum verlaufenden Kammer 28. Über Bohrungen 19, 20 wird Kühlmittel zu- bzw. abgeführt und dient zur Kühlung der Niederhalter 12 insbesondere im Bereich der dem Becher 4 zugewanden Stirnseite.

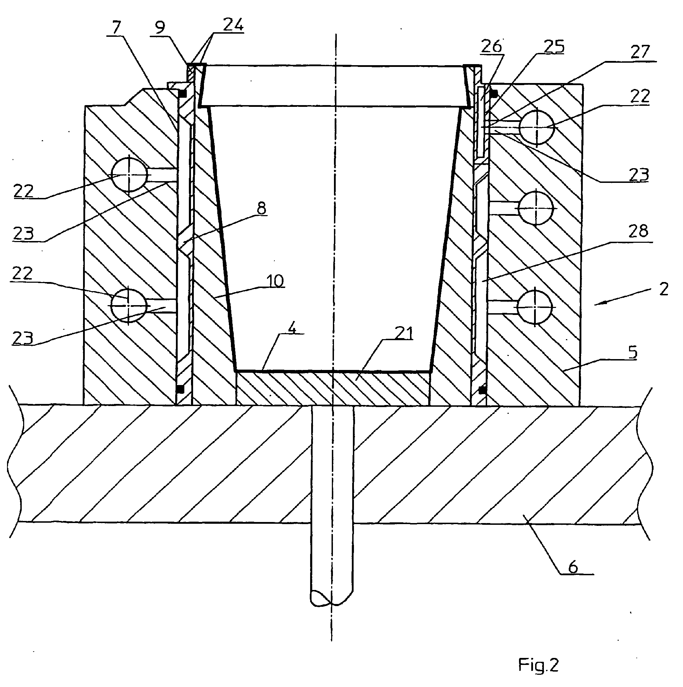

Das Unterteil 2 setzt sich zusammen aus einer Grundplatte 6 und einem Kühlblock 5, der pro Formnest eine Bohrung 7 zur Aufnahme einer Kühlbüchse 8, die gemäß einer ersten Ausführungsform - dargestellt in Figur 1 links und Figur 2 links - mit einem Schnittring 9 verbunden ist. In Kühlbüchse 8 und Schnittring 9 sitzt der Formeinsatz 10, der dem Behälter 4 die Form gibt. Über einen verschiebbaren Formboden 21 können die geformten und ausgestanzten Behälter 4 ausgeworfen werden. Über mehrere Bohrungen 22, 23 im Kühlblock 5 wird Kühlmittel zu den ringsum verlaufenden Kammern 28 zwischen den Wandungen von Kühlbüchse 8 und Bohrung 7 in bekannter Weise zu- und abgeführt.

Die Erfindung betrifft die Gestaltung und Herstellung der Kühlbüchse 8 und des Schnittringes 9, 25. Um eine gute Kühlwirkung bis zur Stirnfläche 24 des Schnittringes 9, 25 zu erzielen ist die Kühlbüchse 8 aus einem Werkstoff mit guter Wärmeleitfähigkeit gefertigt. Beispielsweise seien hier Legierungen auf Kupferbasis genannt, wie Messing und Bronze. Der Schnittring 9, 25 ist aus Stahl und wird vorzugsweise zumindest im Schneidebereich gehärtet. Schnittring 9, 25 und Kühlbüchse 8 sind fest miteinander verbunden, was bei den gegebenen Größenverhältnissen nur durch bestimmte Verfahren möglich ist. So lassen sich beide Teile durch Laserschweißen miteinander verbinden. Es gibt aber noch eine weitere Fertigungsmöglichkeit, die unter dem Begriff Laserformen bekannt ist. Dabei wird Metallpulver aus verschiedenen Materialien schichtweise mit dem bereits gebildeten Teil mittels eines Laserstrahles verschweißt. Man kann auf diese Weise ein einziges Teil, wie in Figur 2 links dargestellt, aus Kühlbüchse 8 und Schnittring 9 herstellen, indem man auf die Kühlbüchse 8 schichtweise örtlich entsprechend der gewünschten Form des Schnittringes 9 Metallpulver mittels Laserstrahl aufschweißt. Die Schichtdicken pro Schweißvorgang liegen dabei im Bereich von 0,1 mm. Der Laserstrahl, der das Verschweißen vornimmt, kann durch eine geeignete Maschine jede beliebige Fläche überstreichen und damit jede gewünschte Form der Verschweißung vornehmen. Diese Maschine übernimmt auch den schichtweisen Auftrag des Metallpulvers und arbeitet vollautomatisch nach CNC-Programm. So lässt sich der Schnittsring 9 schichtweise aufbauen bis zur gewünschten Gestalt.
Das Laserformen ermöglicht auch einen Aufbau eines Schnittringes 25, wie in den Figuren 1 und 2 rechts dargestellt. In diesem Fall wird im Innem eine umlaufende geschlossene Kühlkammer 26 eingeformt, die über eine Öffnung 27 mit den Bohrungen 22, 23 zum Zu- und Abführen von Kühlmittel in Verbindung steht. Wahlweise kann dabei dieser Schnittring 25 als Einzelteil hergestellt und dann durch Laserschweißen mit der Kühlhülse 8 verbunden werden. Oder man bringt den Schnittring 25 direkt durch Laserformen auf der Kühlhülse 8 auf.
Das Laserformen ermöglicht es auch, den Schnittring 9, 25 aus mehreren Materialien herzustellen, indem z.B. der Schnittbereich aus einem härtbaren Stahl hergestellt wird, der restliche Teil aus einem nicht härtbaren Stahl. Dies kann je nach Gestalt des Schnittringes 9, 25 Vorteile bieten bezüglich des Härtens des Schnittbereichs und des Verzugs hierbei sowie hinsichtlich der Bruchempfindlichkeit des Schnittringes 9, 25. Auch die Wärmeleitfähigkeit kann hierdurch positiv beeinflusst werden.

## Patentansprüche

1. Formwerkzeug zum Tiefziehen von Behältern (4) aus einer erwärmten Folienbahn (3) aus thermoplastischem Kunststoff, bestehend aus Oberteil (1) und Unterteil (2), wobei das Oberteil (1) pro Formnest einen Niederhalter (12) und einen darin verschiebbaren Streckhelfer (14) und das Unterteil (2) einen Kühlblock (5), pro Formnest eine darin eingesetzte Kühlhülse (8) und einen jeder Kühlhülse (8) zugeordneten Schnittring (9, 25) aufweist, wobei jede Kühlhülse (8) einen Formeinsatz mit der Form des herzustellenden Behälters (4) trägt und Kühlhülse (8) und Schnittring (9, 25) aus unterschiedlichem Material bestehen, **dadurch gekennzeichnet, dass** Schnittring (9, 25) und zugeordnete Kühlhülse (8) untrennbar verbunden sind.

2. Formwerkzeug nach Anspruch 1, **dadurch gekennzeichnet, dass** Schnittring (9, 25) und Kühlhülse (8) miteinander verschweißt sind.

3. Formwerkzeug nach Anspruch 1 oder 2, **dadurch gekennzeichnet, dass** der Schnittring (9, 25) ein lasergeformtes Teil ist, das mit der Kühfhülse (8) verschweißt ist.

4. Formwerkzeug nach Anspruch 3, **dadurch gekennzeichnet, dass** im Innem des Schnittringes (25) ein Kühlkanal (26) eingeformt ist, der über eine Öffnung (27) mit Bohrungen (22, 23) zum Zu- und Ableiten von Kühlmittel in Verbindung stehen.

5. Formwerkzeug nach einem der Ansprüche 3 bis 4, **dadurch gekennzeichnet, dass** der Schnittring (9, 25) aus mehreren Materialien besteht.

6. Formwerkzeug nach Anspruch 5, **dadurch gekennzeichnet, dass** der Schnittbereich des Schnittringes (9, 25) aus einem härtbaren Stahl, der übrige Teil aus einem nicht härtbaren Stahl besteht.

7. Formwerkzeug nach einem der Ansprüche 1 bis 6, **dadurch gekennzeichnet, dass** der Schnittring (9, 25) direkt durch Laserformen mit der Kühlhülse (8) verbunden ist.

## Claims

1. A moulding tool for deep-drawing containers (4) from a heated strip (3) of thermoplastic plastic, including an upper part (1) and a lower part (2), wherein the upper part (1) has one holding down clamp (12) and one stretching aid (14) movable therein per mould cavity, and the lower part (2) has one cooling block (5), one cooling jacket (8) placed therein per mould cavity, and one compression ring (9, 25) assigned to each cooling jacket (8), wherein each cooling jacket (8) supports a mould insert with the shape of the container (4) to be produced, and the cooling jacket (8) and compression ring (9, 25) are made from different materials,
**characterised in that** the compression ring (9, 25) and the assigned cooling jacket (8) are inseparably attached.

2. The moulding tool as cited in claim 1, **characterised in that** the compression ring (9, 25) and cooling jacket (8) are welded to one another.

3. The moulding tool as cited in claim 1 or 2, **characterised in that** the compression ring (9, 25) is a laser formed part that is welded to the cooling jacket (8).

4. The moulding tool as cited in claim 3, **characterised in that** a cooling channel (26) is conformed in the interior of the compression ring (25) and communicates with bore holes (22, 23) via an opening (27) for the feeding and draining of cooling medium.

5. The moulding tool as cited in either of claims 3 or 4, **characterised in that** the compression ring (9, 25) is made from several materials.

6. The moulding tool as cited in claim 5, **characterised in that** the compression area of the compression ring (9, 25) is made from a steel that is heat treatable, and the remaining part is made from a steel that is not heat treatable.

7. The moulding tool as cited in any of claims 1 to 6, **characterised in that** the compression ring (9, 25) is connected with the cooling jacket (8) by laser forming.

## Revendications

1. Outil de formage pour l'emboutissage de récipients (4) dans une bande de film chauffée (3) en matière thermoplastique, composé d'une partie supérieure (1) et d'une partie inférieure (2), la partie supérieure (1) présentant par nid de moulage un serre-flan (12) et un auxiliaire d'étirement (14) déplaçable dedans et la partie inférieure (2) un bloc de refroidissement (5), par nid de moulage un manchon de refroidissement (8) inséré dedans et un anneau de matrice (9, 25) associé à chaque manchon de refroidissement (8), chaque manchon de refroidissement (8) supportant une garniture de moulage ayant la forme du récipient à fabriquer (4) et le manchon de refroidissement (8) et l'anneau de matrice (9, 25) étant composés de matériaux différents, **caractérisé en ce que** l'anneau de matrice (9, 25) et le manchon de refroidissement associé (8) sont reliés de manière inséparable.

2. Outil de formage selon la revendication 1, **caractérisé en ce que** l'anneau de matrice (9, 25) et le manchon de refroidissement (8) sont soudés ensemble.

3. Outil de formage selon la revendication 1 ou 2, **caractérisé en ce que** l'anneau de matrice (9, 25) est une pièce formée au laser qui est soudée au manchon de refroidissement (8).

4. Outil de formage selon la revendication 3, **caractérisé en ce qu'**à l'intérieur de l'anneau de matrice (25) est creusé un canal de refroidissement (26) qui est en liaison (27) par des alésages (22, 23) avec le système d'apport et d'évacuation de refroidisseur.

5. Outil de formage selon une des revendications 3 à 4, **caractérisé en ce que** l'anneau de matrice (9, 25) est composé de plusieurs matériaux.

6. Outil de formage selon la revendication 5, **caractérisé en ce que** la zone de coupe de l'anneau de matrice (9, 25) est composée d'un acier pouvant être trempé, la partie restante d'un acier ne pouvant être trempé.

7. Outil de formage selon une des revendications 1 à 6, **caractérisé en ce que** l' anneau de matrice (9, 25) est relié directement par formage au laser au manchon de refroidissement (8).
